# EUROPÄISCHE PATENTSCHRIFT

(11) **EP 2 415 556 B1**
(45) Veröffentlichungstag und Bekanntmachung des Hinweises auf die Patenterteilung: **21.11.2012**
(21) Anmeldenummer: 10171571.2
(22) Anmeldetag: 02.08.2010
(51) Int. Cl.: B23Q 1/58, B23Q 11/00, B23Q 15/24, H02K 41/02

(54) **Antrieb für eine Maschine mit impulsentkoppelter Arbeitspunktverstellung**
Drive for a machine with impulse-independent operating point adjustment
Entraînement pour une machine dotée d'un réglage de point de travail couplé à des impulsions

(43) Veröffentlichungstag der Anmeldung: 08.02.2012
(73) Patentinhaber: Siemens Aktiengesellschaft, 80333 München (DE)
(72) Erfinder: Knorr, Markus, 86157 Augsburg (DE)

(56) Entgegenhaltungen:
- EP-A1- 1 247 613
- WO-A1-2008/040336
- DE-A1- 19 810 996
- DE-A1-102008 059 888

## Beschreibung

Die vorliegende Erfindung betrifft einen Antrieb für eine Maschine mit einem Kurzhubmotor und einer Impulsentkopplungsvorrichtung zur regelungstechnischen Entkopplung von Impulsen des Kurzhubmotors von der Maschine.

An vielen Maschinen in industriellen Produktionsprozessen werden Werkstücke oder Werkzeuge bewegt. Die Bewegung erfolgt entlang fest vorgegebener Achsbahnen. Die Arbeitsgeschwindigkeit der Maschine hängt wesentlich von der Geschwindigkeit der Zustell- und Transportbewegungen ab. Im Sinne von hohen Maschinenproduktivitäten werden daher hohe Achsgeschwindigkeiten angestrebt.

In den meisten Fällen werden die Zustellbewegungen, von denen eine gewisse Präzision gefordert wird, von geregelten elektrischen Servoantrieben ausgeführt. Sofern es sich nicht um einen Direktantrieb handelt, wird das Drehmoment des Servomotors mithilfe von Transmissionselementen, wie z.B. Kugelrollspindeln, Zahnriemen oder Zahnstangen auf die linear zu bewegenden Maschinenschlitten übertragen. Derartige Antriebssysteme sind in der industriellen Technik weit verbreitet.

Hohe Geschwindigkeiten der Linearbewegungen werden zwangsläufig von hohen Beschleunigungen und hohem Ruck (Änderung der Beschleunigung je Zeiteinheit) begleitet. Insbesondere steigt der Ruck mit der Arbeitsgeschwindigkeit der Servoachse dramatisch an. Der Ruck regt die Maschinenstruktur zu Schwingungen an, die sich nachteilig auf die Präzision und die Konturgenauigkeit des Fertigungsprozesses auswirken. Häufig ist es dann notwendig, die Beschleunigung und die Achsgeschwindigkeit so weit zurückzunehmen, dass die kritischen Ruckwerte nicht überschritten werden. Die Begrenzung der Achsgeschwindigkeit wirkt sich allerdings negativ auf die Produktivität der Maschine aus. Es wäre daher wünschenswert, die Achsgeschwindigkeit steigern zu können, ohne dadurch Schwingungen in der Maschine anzuregen.

Vorschubachsen für kurzhubige Bewegungen mit höchster Dynamik (Größenordnung der Beschleunigungen: 30 g, Größenordnung der Frequenzen: 100 Hz) werden meist als Linearmotoren mit bewegten Sekundärteilen (Magneten) ausgeführt. Um die bewegte Masse klein zu halten, ist das Sekundärteil mit den Magneten gerade so lang, dass die Spulen des Primärteils immer voll überdeckt sind.

Wie erwähnt, führt die hohe Bewegungsdynamik in der Regel zu unzulässigen Schwingungsanregungen in der Maschinenkonstruktion, in der eine solche Einheit integriert wird. Es wird daher in der Druckschrift DE 101 17 460 A1 eine Impulsentkopplung vorgeschlagen, um derartige Anregungen zu vermeiden. Ein impulsentkoppelter Transmissionsantrieb hält Reaktionskräfte weitgehend von einem Maschinenbett fern. Der Antrieb weist einen Servomotor, ein erstes Transmissionselement und ein zweites Transmissionselement auf. Das zweite Transmissionselement ist in Bezug auf ein Maschinenbett in Bewegungsrichtung eines Maschinenschlittens bewegbar gelagert. Reaktionskräfte, die aufgrund einer Bewegung des Maschinenschlittens auftreten, werden durch eine entsprechende Gegenbewegung des zweiten Transmissionselements bzw. eines damit verbundenen Reaktionsschlittens kompensiert und nicht auf das Maschinenbett übertragen. Zur Steuerung der Position des Maschinenschlittens werden Positionssollwerte mit Ist-Positionsdaten für den Reaktionsschlitten in Bezug auf das Maschinenbett korrigiert.

Es besteht häufig der Bedarf, den Arbeitspunkt eines Kurzhub(linear)motors zu variieren, an dem der Kurzhubmotor seine Bewegungen ausführt. Dies ist aufgrund der zuvor beschriebenen Randbedingungen (möglichst kurzes Sekundärteil) mit dem Verfahrweg des Kurzhubmotors nicht möglich.

Zur Arbeitspunktverstellung ist es bislang daher notwendig, die komplette, impulsentkoppelte Einheit auf eine zusätzliche Hilfspositionierachse zu montieren, welche die größeren Verstellwege übernimmt. Diese Achse kann im Betrieb geklemmt werden.

Die Aufgabe der vorliegenden Erfindung besteht darin, eine Arbeitspunktverstellung des Kurzhubmotors mit weniger Aufwand realisieren zu können.

Erfindungsgemäß wird diese Aufgabe gelöst durch einen Antrieb für eine Maschine gemäß Anspruch 1.

In vorteilhafter Weise kann so die Impulsentkopplungsvorrichtung ganz oder teilweise als Arbeitspunktverstelleinrichtung genutzt werden. Dadurch lässt sich in der Regel eine Achse einsparen, wodurch die Steifigkeit der Maschine insgesamt zunimmt. Dies wiederum macht sich positiv im Hinblick auf die Produktionsqualität bemerkbar.

Vorzugsweise handelt es sich bei dem Kurzhubmotor um einen Linearmotor. Damit kann eine sehr hohe Dynamik gewährleistet werden.

Darüber hinaus kann die Impulsentkopplungsvorrichtung zur Entkopplung und zur Verstellung des Arbeitspunkts des Kurzhubmotors einen Verstelllinearmotor aufweisen. Dies hat den Vorteil, dass die Entkopplung eine sehr hohe Qualität erreicht, denn die Aktivteile des Verstelllinearmotors sind nicht mechanisch miteinander gekoppelt, sondern ausschließlich magnetisch.

Alternativ kann die Impulsentkopplungsvorrichtung zur Entkopplung und zur Verstellung des Arbeitspunkts des Kurzhubmotors einen Zahnriemenantrieb, einen Antrieb mit Zahnstange oder einen Kugelgewindetrieb aufweisen. Derartige Antriebe für die Verstellung des Arbeitspunkts lassen sich in der Regel kostengünstig realisieren.

Bei einer speziellen Ausführungsform ist durch die Impulsentkopplungsvorrichtung eine Position des Kurzhubmotors beim Verstellen des Arbeitspunkts fest gegenüber einem Bauteil der Arbeitspunktverstelleinrichtung regelbar. Damit kann ein mechanischer Anschlag bzw. Endanschlagdämpfer vermieden werden, mit denen sichergestellt wird, dass sich die Aktivteile des Kurzhubmotors nicht "verlieren", wenn der Arbeitspunkt des Kurzhubmotors verstellt wird.

Wie bereits angedeutet wurde, kann eine Maschine mit einem Maschinenteil und einem daran angebrachten Antrieb der oben genannten Art bereitgestellt werden. In einer Variante kann sowohl der Kurzhubmotor ein Linearmotor sein als auch die Impulsentkopplungsvorrichtung einen Verstelllinearmotor aufweisen. Dabei ist es günstig, wenn ein Aktivteil des Verstelllinearmotors fest mit dem Maschinenteil und das andere Aktivteil des Verstelllinearmotors mit einem Aktivteil des Kurzhublinearmotors verbunden ist. Hierdurch lässt sich eine sehr wirkungsvolle Impulsentkopplung sowie eine sehr präzise Arbeitspunktverstellung realisieren.

Das andere Aktivteil des Kurzhublinearmotors kann gegen das eine Aktivteil des Kurzhublinearmotors oder aber gegen das Maschinenteil bzw. ein anderes Maschinenteil der Maschine gelagert sein. Dadurch ist eine hohe Flexibilität bei der Gestaltung des Kurzhubmotors gegeben.

Die Lagerung des anderen Aktivteils des Kurzhublinearmotors kann durch ein Hydrolager, ein Luftlager oder eine mechanische Führung (z.B. Wälzlager, Festkörperlager (beispielsweise spezielle Blattfeder) und dergleichen) erfolgen. Damit kann ein verschleißfreies Lagern erreicht werden.

Die vorliegende Erfindung wird nun anhand der beigefügten Zeichnungen näher erläutert, in denen zeigen:
- FIG 1: eine Prinzipskizze eines erfindungsgemäßen Antriebs mit einem Linearmotor für die Verstellachse und
- FIG 2: eine Prinzipskizze eines erfindungsgemäßen Antriebs mit einem Zahnriemenantrieb für die Verstellachse.

Die nachfolgend näher geschilderten Ausführungsbeispiele stellen bevorzugte Ausführungsformen der vorliegenden Erfindung dar.

Der Erfindung liegt die Idee zugrunde, die Impulsentkopplungsbauelemente sowie die zusätzliche Positionierachse in eine Einheit zu integrieren.

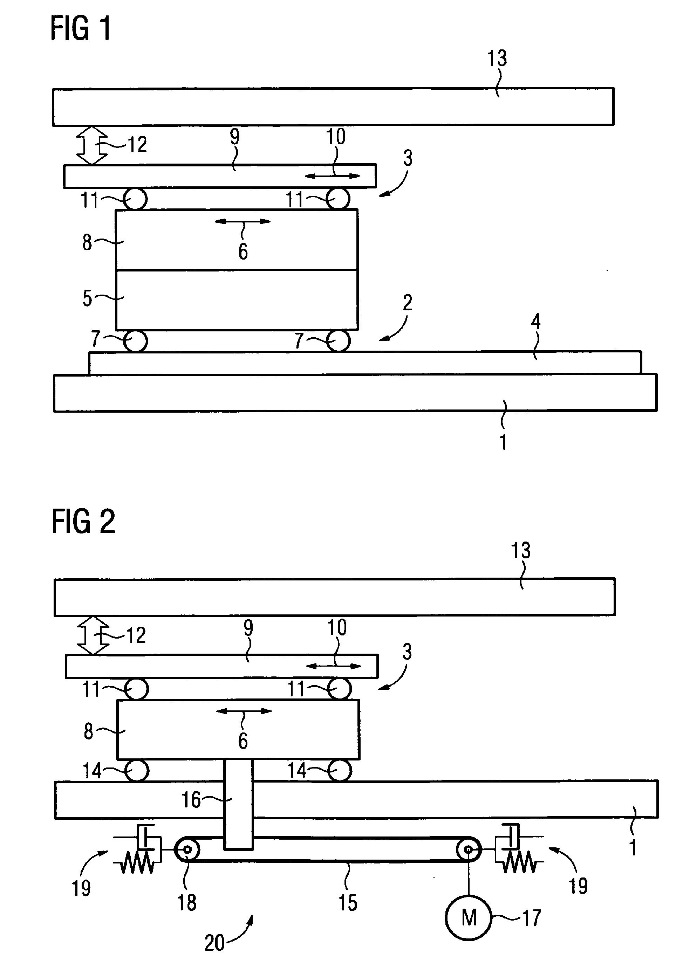

In dem Beispiel von FIG 1 ist an einem Maschinenteil 1, z.B. einem Maschinengestell, ein Verstelllinearmotor 2 angebracht. Der Verstelllinearmotor 2 dient zur Impulsentkopplung und zur Arbeitspunktverstellung eines Kurzhublinearmotors 3. Der Verstelllinearmotor 2 besitzt ein Sekundärteil 4, das ein erstes Aktivteil des Verstelllinearmotors darstellt. Es ist fest an das Maschinenteil 1 montiert. Als aktive Komponenten weist es Permanentmagnete auf.

Über dem Sekundärteil 4 ist hier das Primärteil 5 des Verstelllinearmotors 2 linear beweglich gelagert. Das Primärteil 5 des Verstelllinearmotors 2 ist entlang der Bewegungsrichtung 6 zum Zwecke der Impulsentkopplung sowie zum Zwecke der Arbeitspunktverstellung bewegbar.

Das Primärteil 5 des Verstelllinearmotors 2 ist gegenüber dem Sekundärteil 4 durch ein Lager 7 gelagert. Das Lager 7 kann als Kugellager, Rollenlager, aber auch als Luft- oder Hydrolager ausgebildet sein. Darüber hinaus kann die Lagerung des Primärteils 5 auch gegenüber dem Maschinenteil 1 erfolgen.

An dem Primärteil 5 des Verstelllinearmotors 2 ist ein Primärteil 8 des Kurzhublinearmotors 3 befestigt.

Ein Sekundärteil 9 des Kurzhublinearmotors 3 führt in der gleichen Richtung 10 wie das Primärteil 8 (Richtung 6) Linearbewegungen mit kurzem Hub durch. Gelagert ist das Sekundärteil 9 des Kurzhublinearmotors 3 hier an dem Primärteil 8 mithilfe einer Lagerung 11. Die Lagerung 11 ist vorzugsweise als Hydrolager oder Luftlager ausgebildet. Eine Wegmesseinrichtung 12 (in FIG 1 als Doppfeilpfeil dargestellt) dient zur genauen Erfassung des Verfahrwegs bzw. der Position des Sekundärteils 9 des Kurzhublinearmotors 3 gegenüber einem Maschinenteil 13 der Maschine. Die Wegmessung kann aber auch gegenüber dem bereits genannten Maschinenteil 1 erfolgen, auf das das Sekundärteil 4 des Verstelllinearmotors 2 befestigt ist. Die von der Wegmessung 12 erhaltenen Werte werden für die Regelung des Kurzhublinearmotors 3 sowie des Verstelllinearmotors 2 verwendet. Die hierfür notwendige Regelungseinrichtung ist in FIG 1 nicht dargestellt. Sie ist prinzipiell an die Primärteile der beiden Linearmotoren 2 und 3 anzuschließen und erhält ihren Istwert von der Wegmesseinrichtung 12.

Sobald der Kurzhublinearmotor 3 und insbesondere dessen Sekundärteil 9 die gewünschten Kurzhubbewegungen durchführt, führen die Primärteile 5 und 8 der beiden Linearmotoren 2 und 3 entsprechende Gegenbewegungen aufgrund des Impulserhaltungssatzes durch. Es soll jedoch vermieden werden, dass etwaige Impulse direkt auf das Maschinengestellt bzw. einem Maschinenteil 1 oder 13 übertragen werden. Daher wird die Bewegung des Primärteils 8 des Kurzhublinearmotors 3 gegenüber den Maschinenteilen 1, 13 abgefedert und gedämpft. Dies erfolgt durch eine entsprechende Regelung des Verstelllinearmotors 2, der damit die Funktion des Kurzhublinearmotors von der Maschine übernimmt.

Es ist außerdem gewünscht, dass der Kurzhublinearmotor 3 in seinem Arbeitspunkt (Zentrum seiner Kurzhubbewegung) verstellbar ist. Da die Pulsentkopplungsvorrichtung in Form eines Linearmotors mit entsprechender Regelung realisiert ist, kann der Linearmotor 2 auch für die Arbeitspunktverstellung genutzt werden. Unter Umständen kann auch ein Teil der Regelungseinrichtung für die Impulsentkopplung zur Arbeitspunktverstellung mitgenutzt werden. Für die Arbeitspunktverstellung besitzt der Stelllinearmotor 2 hier gegenüber dem Sekundärteil 9 des Kurzhublinearmotors 3 ein längeres Sekundärteil 4. Bei dem Verstelllinearmotor spielt die Masse des Sekundärteils 4 kaum eine Rolle, so dass es so lang ausgeführt werden kann, wie der gewünschte Verstellweg es erfordert.

Eine alternative Ausführungsform des erfindungsgemäßen Antriebs ist in FIG 2 dargestellt. Das Sekundärteil 9 des Kurzhublinearmotors 3 soll auch hier entsprechende Kurzhubbewegungen gegenüber einem Maschinenteil 1 bzw. 13 durchführen. Der Kurzhublinearmotor 3 besitzt neben dem Sekundärteil 9 wie in dem Beispiel von FIG 1 ein Primärteil 8. Das Primärteil 8 und Sekundärteil 9 führen wie in dem Beispiel von FIG 1 die Bewegungen in den Richtungen 6 und 10 durch. In dem Beispiel von FIG 2 erfolgt die Lagerung des Sekundärteils 9 gegenüber dem Primärteil 8 ebenfalls durch ein Lager 11.

Anstelle des Verstelllinearmotors 2 ist hier ein Zahnriemenantrieb 20 vorgesehen, mit dem ebenfalls die beiden Funktionen in Pulsentkopplung und Arbeitspunktverstellung realisiert werden. Dazu ist das Primärteil mit einem Lager 14 unmittelbar an dem Maschinenteil 1 gelagert. Ein von einem Zahnriemen 15 in der Richtung 6 bzw. 10 bewegbarer Mitnehmer 16 ist fest an das Primärteil 8 des Kurzhublinearmotors angebracht, um es in gewünschter Weise mit dem Zahnriemen 15 zu bewegen. Der Zahnriemen 15 seinerseits wird mithilfe seines Servomotors 17 und einer Umlenkrolle 18 bewegt. Über Feder-Dämpfer-Elemente 19 ist der Zahnriemenantrieb und insbesondere der Servermotor 17 und die Umlenkrolle 18 an dem Maschinenteil 1 befestigt.

Die bei den Kurzhubbewegungen des Kurzhublinearmotors 3 auf das Primärteil 8 ausgeübten Impulse werden über den Mitnehmer 16, den Zahnriemen 15 und die Feder-Dämpfungselemente 19 nur gedämpft auf das Maschinenteil 1 übertragen, so dass in einem gewissen Maße eine Impulsentkopplung zwischen dem Kurzhublinearmotor 3 und dem Maschinenteil 1 gegeben ist. Durch den Zahnriemenantrieb wird ähnlich wie in Druckschrift DE 101 17 460 A1 die Bewegung des Primärteils 8 kompensiert. Es ist für die Impulsentkopplung eine Regelung wie in dem genannten Dokument notwendig. Die entsprechende Regelungseinrichtung ist in FIG 2 der Übersicht halber nicht eingezeichnet.

Der Zahnriemenantrieb 20 ist hier aber zusätzlich so ausgelegt, dass der Arbeitspunkt des Kurzhublinearmotors 3 wie in dem Beispiel von FIG 1 verstellt werden kann. Er besitzt hierzu die entsprechende Länge und seine Regelungseinrichtung ist entsprechend ausgebildet. Anstelle des Zahnriemenantriebs kann aber auch ein Zahnstangenantrieb, ein Kugelgewindetrieb und dergleichen für die Zusatzachse verwendet werden.

Im "Verstellmodus" wird der Verstelllinearmotor 2 bzw. der Zahnriemenantrieb 20 mittels seines Servomotors 17 in die gewünschte Position auf dem Maschinengestell 1, 13 gefahren. Der Kurzhublinearmotor 3 kann hierfür z. B. abgeschaltet sein und das Kurzhublinearmotor-Sekundärteil 9 kann über Endanschlagdämpfer, die ein "Verlieren" des Sekundärteils 9 vermeiden, mit dem Primärteil 8 mitgeführt werden. Alternativ kann das Sekundärteil 9 des Kurzhublinearmotors 3 so positionsgeregelt werden, dass ein Synchronlauf mit der Verstellachse 2 bzw. 20 sichergestellt ist.

Im Arbeitsmodus wird die Regelung des Verstelllinearmotors 2 oder Servomotors 17 der Verstellachse entsprechend einer für die Impulsentkopplung passenden "Feder-Dämpferkennlinie" eingestellt, so dass eine ausreichende Tiefpasswirkung gegen das Maschinengestell 1, 13 erzielt wird. Aufgrund der Lageregelung des Verstelllinearmotors 2 oder Servomotors 17 wird jedoch vermieden, dass das Primärteil 8 des Kurzhublinearmotors 3 gegenüber dem Maschinengestell bzw. den Maschinenteilen 1, 13 "wegdriftet".

Grundsätzlich ist ein zweiter Linearmotor 2 für die Verstellachse gemäß FIG 1 zu bevorzugen, da ein mechanisches Übertragungsglied wie der Zahnriemen 15 auf Umlenkrollen 18 gelagert wird, deren Achsen die Rückstoßkräfte des Kurzhublinearmotors 3 als dynamische Auflagerkräfte in das Maschinengestell 1, 13 einleiten können (z.B. wenn der Servomotor 17 fest gebremst wird). Wird der Servomotor zur Impulsentkopplung "weich" geregelt, so können diese Kräfte im Frequenzinhalt gegebenenfalls ausreichend reduziert werden (insbesondere können höhere Frequenzen durch die Feder-/Dämpfer-Funktion reduziert werden. Falls dies nicht gelingt, müssen die Lager des elektromechanischen Antriebs zusätzlich über eine Feder-/Dämpferkonstruktion verfügen. Alternativ kann z. B. der Zahnriemen 15 entsprechend weich ausgeführt werden.

Das Kurzhublinearmotor-Sekundärteil 9 kann, wie oben bereits angedeutet wurde, sowohl gegen das Maschinengestell 1, 13 gelagert sein oder wie im dargestellten Fall gegen das Primärteil 8. Ebenso sind Primär- und Sekundärteil des Kurzhublinearmotors 3 aber auch des Verstelllinearmotors 2 prinzipiell vertauschbar. Als Führungen bzw. Lager sind verschiedene Ausführungen möglich. Bei sehr kurzhubigen Bewegungen sind verschleißfreie Ausführungen (z.B. Hydrolager oder Luftlager) bevorzugt.

Eine mechanisch steife Präzisionswegmessung vom Kurzhublinearmotorteil (Sekundärteil 9) zum Maschinengestell (Maschinenteil 13) ist entscheidend für die Bearbeitungsgenauigkeit und kann sowohl statische wie dynamische Fehlstellungen der Verstellachse 2, 20 ausgleichen, da die Lageregelung der Kurzhubachse 3 mit einer entsprechend hohen regelungstechnischen Bandbreite ausgeführt werden muss.

Als Beispiel für die Anwendung des oben geschilderten Antriebs kann eine Achse einer Fräsmaschine genannt werden. Das Maschinenteil 1 bzw. 13 wäre dann beispielsweise ein Maschinenbett oder ein Portalaufbau.

Die obigen Ausführungsbeispiele beziehen sich auf Linearantriebe. Es ist aber ebenso möglich, dass der Kurzhubmotor beispielsweise ein rotatorischer Schrittmotor ist. Ebenso kann der Kurzhubmotor eine beliebige nichtlineare Bewegung ausführen. Die Impulsentkopplungsvorrichtung ist dann entsprechend geometrisch auszulegen, so dass durch sie sowohl die Impulsentkopplung als auch die Arbeitspunktverstellung möglich ist.

Gegenüber dem Stand der Technik ergibt sich somit der Vorteil, dass Führungen sowie Feder und Dämpfer für die Impulsentkopplung des Primärteils entfallen können, da der Verstellantrieb hierfür genutzt wird. Als weiterer Vorteil ist zu nennen, dass die Einstellbarkeit der Funktion "Federung" und Dämpfung" bei der erfindungsgemäßen Ausführung der Impulsentkopplung regelungstechnisch sehr einfach zu realisieren und parametrieren ist. Weiterhin kann der Antrieb gegenüber dem Stand der Technik kleiner gebaut und damit besser in die Arbeitsmaschine integriert werden. Außerdem werden weniger Bauteile benötigt, was zu geringeren Kosten für Material und Bearbeitung sowie Montage aber auch zu weniger Verschleiß führt.

## Patentansprüche

1. Antrieb für eine Maschine mit
- einem Kurzhubmotor (3) und
- einer Impulsentkopplungsvorrichtung (2,20) zur regelungstechnischen Entkopplung von Impulsen des Kurzhubmotors (3) von der Maschine,
**dadurch gekennzeichnet, dass**
- mindestens eine Komponente der Impulsentkopplungsvorrichtung (2,20) für eine Arbeitspunktverstelleinrichtung zum Verstellen eines Arbeitspunkts des Kurzhubmotors (3) genutzt ist, wobei die impulsentkoppelungs vorrichtung (2,20) zur entkoppelung und zur Verstellung des Arbeitpunkts der Kurzhubmotors (3) einen Verstelllinear motor oder einen Verstellantrieb auf weist.

2. Antrieb nach Anspruch 1, wobei der Kurzhubmotor (3) ein Linearmotor ist.

3. Antrieb nach Anspruch 1 oder 2, wobei der Verstellantrieb ein Zahnriemenantrieb, ein Antrieb mit Zahnstange oder ein Kugelgewindetrieb ist.

4. Antrieb nach einem der vorhergehenden Ansprüche, wobei durch die Impulsentkopplungsvorrichtung (2,20) eine Position des Kurzhubmotors (3) beim Verstellen des Arbeitspunkts fest gegenüber einem Bauteil der Arbeitspunktverstelleinrichtung regelbar ist.

5. Maschine mit einem Maschinenteil (1,13) und einem daran angebrachten Antrieb nach einem der vorhergehenden Ansprüche.

6. Maschine nach Anspruch 5, wobei der Antrieb gemäß dem Anspruch 2 ausgebildet ist und wobei ein Aktivteil (4) des Verstelllinearmotors (2) mit dem Maschinenteil (1, 13) und das andere Aktivteil (5) des Verstelllinearmotors (2) mit einem Aktivteil (8) des Kurzhublinearmotors (3) verbunden ist.

7. Maschine nach Anspruch 6, wobei das andere Aktivteil (9) des Kurzhublinearmotors (3) gegen das eine Aktivteil (8) des Kurzhublinearmotors gelagert ist.

8. Maschine nach Anspruch 6, wobei das andere Aktivteil (9) des Kurzhublinearmotors (3) gegen das Maschinenteil (1,13) oder ein anderes Maschinenteil der Maschine gelagert ist.

9. Maschine nach einem der Ansprüche 6 bis 8, wobei die Lagerung (11) des anderen Aktivteils (9) des Kurzhublinearmotors (3) durch ein Hydrolager, ein Luftlager oder eine mechanische Führung erfolgt.

## Claims

1. Drive for a machine comprising
- a short-stroke motor (3) and
- a pulse-decoupling device (2, 20) for decoupling pulses of the short-stroke motor (3) from the machine using closed-loop control,
**characterized in that**
- at least one component of the pulse-decoupling device (2, 20) is used for a working-point adjustment device for adjusting a working point of the short-stroke motor (3), wherein the pulse-decoupling device (2, 20) for decoupling and for adjusting the working point of the short-stroke motor (3) has a linear adjusting motor or an adjustment drive.

2. Drive according to Claim 1, wherein the short-stroke motor (3) is a linear motor.

3. Drive according to Claim 1 or 2, wherein the adjustment drive is a toothed belt drive, a drive with a toothed rack or a ball screw.

4. Drive according to one of the preceding claims, wherein a position of the short-stroke motor (3) can be subjected to closed-loop control by the pulse-decoupling device (2, 20) during adjustment of the working point fixedly with respect to a component part of the working-point adjustment device.

5. Machine with a machine part (1, 13) and a drive fitted thereto according to one of the preceding claims.

6. Machine according to Claim 5, wherein the drive is designed according to Claim 2, and wherein one active part (4) of the linear adjusting motor (2) is connected to the machine part (1, 13), and the other active part (5) of the linear adjusting motor (2) is connected to one active part (8) of the short-stroke linear motor (3).

7. Machine according to Claim 6, wherein the other active part (9) of the short-stroke linear motor (3) is mounted against the one active part (8) of the short-stroke linear motor.

8. Machine according to Claim 6, wherein the other active part (9) of the short-stroke linear motor (3) is mounted against the machine part (1, 13) or another machine part of the machine.

9. Machine according to one of Claims 6 to 8, wherein the mounting arrangement (11) of the other active part (9) of the short-stroke linear motor (3) is provided by a hydraulic bearing, a pneumatic bearing or a mechanical guide.

## Revendications

1. Entraînement pour une machine comprenant
- un moteur ( 3 ) à course petite et
- un dispositif ( 2, 20 ) de découplage d'impulsions pour le découplage en technique de régulation d'impulsions du moteur ( 3 ) à course petite de la machine,
caractérisé en ce
- au moins un composant du dispositif ( 2, 20 ) de découplage d'impulsions est utilisé pour un dispositif de réglage du point de travail pour régler un point de travail du moteur ( 3 ) à course petite, le dispositif ( 2, 20 ) de découplage d'impulsions ayant, pour le découplage et pour le réglage du point de travail du moteur ( 3 ) à course petite, un moteur linéaire de réglage ou un entraînement de réglage.

2. Entraînement suivant la revendication 1, dans lequel le moteur ( 3 ) à course petite est un moteur linéaire.

3. Entraînement suivant la revendication 1 ou 2, dans lequel l'entraînement de réglage est un entraînement à courroie dentée, un entraînement à crémaillère ou un entraînement à bille et vis.

4. Entraînement suivant l'une des revendications précédentes, dans lequel par le dispositif ( 2, 20 ) de découplage d'impulsions, une position du moteur ( 3 ) à course petite est, lors du réglage du point de travail, réglable de manière fixe par rapport à un composant du dispositif de réglage du point de travail.

5. Machine ayant une partie ( 1, 13 ) de machine et un entraînement qui y est monté suivant l'une des revendications précédentes.

6. Machine suivant la revendication 5, dans laquelle l'entraînement est formé suivant la revendication 2 et dans laquelle une partie ( 4 ) active du moteur ( 2 ) linéaire de réglage est reliée à la partie ( 1, 13 ) de la machine et l'autre partie ( 5 ) active du moteur ( 2 ) linéaire de réglage est reliée à une partie ( 8 ) active du moteur ( 3 ) linéaire à course petite.

7. Machine suivant la revendication 6, dans laquelle l'autre partie ( 9 ) active du moteur ( 3 ) linéaire à course petite est montée sur la une partie ( 8 ) active du moteur linéaire à course petite.

8. Machine suivant la revendication 6, dans laquelle l'autre partie ( 9 ) active du moteur ( 3 ) linéaire à course petite est montée sur la partie ( 1, 13 ) de la machine ou sur une autre partie de la machine.

9. Machine suivant l'une des revendications 6 à 8, dans laquelle le montage ( 11 ) de l'autre partie ( 9 ) active du moteur ( 3 ) linéaire à course petite s'effectue par un palier hydraulique, par un palier à air ou par un guidage mécanique.
